(19) Europäisches Patentamt
European Patent Office
Office européen des brevets

(11) Veröffentlichungsnummer: **0 154 238**
**A2**

(12) # EUROPÄISCHE PATENTANMELDUNG

(21) Anmeldenummer: 85101730.1

(22) Anmeldetag: 16.02.85

(51) Int. Cl.[4]: C 01 B 17/765

(30) Priorität: 29.02.84 DE 3407360

(43) Veröffentlichungstag der Anmeldung:
11.09.85 Patentblatt 85/37

(84) Benannte Vertragsstaaten:
BE DE FR GB NL

(71) Anmelder: BAYER ANTWERPEN N.V.
Kanaaldok B 1 Kruisschans
B-2040 Antwerpen 4(BE)

(72) Erfinder: Putseys, Roland, Dr.
Sparrendreef 3
B-2180 Heide-Kalmthout(BE)

(72) Erfinder: Cleophas, Jozef
Plantinlaan 57
B-2090 Putte-Stabroek(BE)

(72) Erfinder: Claes, Ludo, Jr.
Paulusstraat 50
B-2130 Brasschaat(BE)

(72) Erfinder: Wieschen, Hermann
Hufelandstrasse 69
D-5000 Köln(DE)

(74) Vertreter: Gremm, Joachim, Dr. et al,
Bayer AG Konzernverwaltung RP Patentabteilung
D-5090 Leverkusen, Bayerwerk(DE)

(54) **Verfahren zur Nutzbarmachung von Wärme aus der Zwischenabsorption einer Schwefelsäure-Doppelkontaktanlage mit Oleumerzeugung.**

(57) Die vorliegende Erfindung betrifft ein Verfahren zur Nutzbarmachung von Wärme aus einer Heißzwischenabsorption mit vorgeschaltetem Oleumturm, welcher mit nur einem Teil der Gesamtgasmenge beaufschlagt wird.

EP 0 154 238 A2

Croydon Printing Company Ltd.

BAYER ANTWERPEN N.V. Antwerpen,

St/ABc

Verfahren zur Nutzbarmachung von Wärme aus der Zwischenabsorption einer Schwefelsäure-Doppelkontaktanlage mit Oleumerzeugung

Die vorliegende Erfindung betrifft ein Verfahren zur Nutzbarmachung von Wärme aus einer Heißzwischenabsorption mit vorgeschaltetem Oleumturm, welcher mit nur einem Teil der Gesamtgasmenge beaufschlagt wird.

In klassischen Anlagen zur Erzeugung von Schwefelsäure wird bisher vorwiegend nur die bei den Gasreaktionen

a) $S + O_2 \longrightarrow SO_2 + Q$

b) $SO_2 + 1/2\ O_2 \longrightarrow SO_3 + Q$

freiwerdende Wärme zur Erzeugung von gespanntem überhitzten Wasserdampf genutzt.

Um auch die bei der Absorption des $SO_3$ gemäß der Bilanzgleichung

c) $SO_3 + H_2O$ —— $H_2SO_4 + Q$

anfallende Wärme zu nutzen, wurden in den letzten Jahren eine Reihe von Vorschlägen gemacht, deren wesentlicher Inhalt die sogenannte Heißabsorption ist.

Bei der Heißabsorption werden die Temperaturen von Gas und Säure am Austritt des Zwischenabsorbers bis auf 160°C und darüber angehoben.

Dadurch bedingt ist der Wärmebedarf für die Wiedererwärmung des Gases auf die Anspringtemperatur des Nachtkontaktes wesentlich geringer, die Gastemperatur steigt hinter dem Zwischenwärmetauscher auf 280°C und darüber an.

Diese fühlbare Wärme des Gases wird in die Säure des Zwischenabsorbers überführt und anschließend durch Wärmetausch zur Erzeugung von Warmwasser zu Heizzwecken oder zur Vorwärmung von Kesselspeisewasser genutzt (DE-A 2 348 108). Durch die Einführung der Heißabsorption ist es somit gelungen, die im Zwischenabsorber anfallende Wärme nutzbar zu machen.

Der Nachteil der derzeit durchgeführten Methode ist jedoch, daß die gesamte durch die Heißabsorption gewinnbare Wärme der heißen Säure unter erheblichem Aufwand zur Überwindung der Korrosionsprobleme entzogen werden

0154238

muß und das Temperaturniveau der gewonnenen Wärme auf ca. 160°C begrenzt ist.

Ist in einer Zwischenabsorption ein Oleumturm angeordnet, ergibt sich ein weiterer Nachteil. Je nach Menge und Konzentration des Oleums sowie des Gases ist eine bestimmte Gleichgewichtstemperatur vorgegeben, bei welcher die Wärme abgeführt werden muß. Diese Temperaturen liegen in einem Bereich von 50 - 80°C, wodurch die hochtemperierte Wärme des eintretenden Gases entwertet und in aller Regel verloren geht.

Aufgabe der Erfindung ist es deshalb, den größten Teil der sonst in den Zwischenabsorber bzw. Oleumturm gelangenden fühlbaren Wärme des Gases auf dem Niveau von hochgespanntem überhitzten Wasserdampf zu gewinnen. Gleichzeitig müssen die bei Unterschreitung des Schwefelsäuretaupunktes auftretenden Korrosionsprobleme überwunden werden.

Überraschenderweise wurde nun gefunden, daß man die gestellte Aufgabe durch eine spezielle zweistufige Kühlung des Gases lösen kann.

Gegenstand der vorliegenden Erfindung ist daher ein Verfahren zur Nutzbarmachung von Wärme aus einer Heißzwischenabsorption mit vorgeschaltetem Oleumturm, welcher mit nur einem Teil der Gasmenge beaufschlagt wird wobei das gesamte aus dem Zwischenwärmeaustauscher austretende $SO_3$-haltige Gas in einem ersten zusätzlichen Gaskühler mit Luft für einen S-Verbrennungs-, Röst- oder Spaltofen zunächst auf eine Temperatur oberhalb des Schwefelsäuretaupunktes von 140 - 160°C vorgekühlt und anschließend die zum Oleumturm geführte Teilgasmenge in einem zweiten zusätzlichen Gaskühler mit Wasser auf eine Temperatur unterhalb des Schwefelsäuretaupunktes maximal 90°C, vorzugsweise 70°C und tiefer abgekühlt wird, wobei die dem Oleumturm zugeführte Teilgasmenge so bemessen wird, daß die zur Erzielung der geforderten Produktion notwendige Gleichgewichtstemperatur maximal 50°C, vorzugsweise 40°C beträgt.

Bei der erfindungsgemäßen Durchführung der zweistufigen Kontaktgaskühlung treten Korrosionsprobleme durch Unterschreitung des Schwefelsäuretaupunktes nicht auf.

Durch Einsatz von Luft als Kühlmittel und entsprechende Wahl der Gasführung und Geschwindigkeiten können die Wandtemperaturen des ersten zusätzlichen Gaskühlers leicht oberhalb des Schwefelsäuretaupunktes gehalten werden.

Bei der anschließenden sprunghaften Unterschreitung des Schwefelsäuretaupunktes entstehen im zweiten zusätzlichen Gaskühler Kondensate aus nicht korrosivem Oleum.

Werden beispielsweise bei einer $SO_3$-Konzentration im Gas von 9 % die Wandtemperaturen der Kühlflächen unterhalb 80°C gehalten, so sind diese durch einen Kondensatfilm aus nichtkorrosivem ca. 21 %igen Oleum geschützt.

Erfindungsgemäß wird deshalb für die zweite Kühlstufe Wasser benutzt, weil aufgrund der stark unterschiedlichen Wärmeübergänge Gas-Wand-Flüssigkeit die Wandtemperaturen nahezu unabhängig von den Gastemperaturen in der Nähe der Flüssigkeitstemperaturen durch Wahl entsprechender Geschwindigkeiten angeordnet werden können.

Eine besonders bevorzugte Ausführungsform des erfindungsgemäßen Verfahrens besteht darin, daß zur Kühlung im zweitem zusätzlichen Gaskühler Kesselspeisewasser benutzt wird.

Vorteilhaft ist es aber auch, zur Kühlung eine andere Flüssigkeit wie Dünnsäure oder Wärmeträgeröl einzusetzen.

Weil bisher die fühlbare Wärme des in einem Oleumturm eintretenden Gases aus genannten Gründen als nicht wiedergewinnbar betrachtet wurde, war man bestrebt, durch Zuführung möglichst großer Mengen des zur Verfügung stehenden Gases die Absorptionstemperaturen des Oleumturmes hoch zu legen, um durch eine große Temperaturdifferenz Austauschfläche bei den Kühlern einzusparen.

Durch die erfindungsgemäße zweistufige Kühlung bis unterhalb des Schwefelsäuretaupunktes ist es nun sinnvoll, den Absorptionspunkt in die Nähe der unteren physikalischen Grenze, d.h. den Einfrierpunkt des jeweiligen Oleums zu legen und so mit geringst möglicher Gasbeaufschlagung, d.h. sehr kleinen Oleumtürmen, ein Maximum an Wärmegewinn zu erzielen.

Nachfolgend wird das erfindungsgemäße Verfahren anhand eines Beispiels näher erläutert, ohne daß dadurch die Erfindung eingeschränkt wird.

Beispiel 1

In einer Anlage gemäß Fig. 1 wird das über Leitung 1 aus em Vorkontakt kommende Gas von 90 000 $Nm^3$ mit 9 % $SO_3$ und einer Temperatur von 496°C zunächst wie üblich in den Zwischenwärmetauschern 2 und 3 im Gegenstrom zu dem aus dem Zwischenabsorber 4 kommenden Gas von 81 966 $Nm^3/h$ und einer Temperatur von 160°C geführt.

Dabei kühlt sich das $SO_3$-haltige über Leitung 6 austretende Gas auf 279°C ab. Gleichzeitig wird das über Leitung 7 weiter zum Nachkontakt geführte Gas auf 420°C erwärmt.

In einem zusätzlichen Gaskühler 8 wird das mit 279°C über Leitung 6 eintretende $SO_3$-haltige Gas im Gegenstrom zu 94 500 $Nm^3/h$ Luft, welche mit 90°C über Leitung 9 ein- und mit 212°C über Leitung 10 wieder austritt, auf 160°C abgekühlt.

Die dabei ausgetauschte Wärme von $3{,}69 \cdot 10^6$ Kcal/h wird mit der Luft über Leitung 10 einem Schwefel-Verbrennungsofen mit Abhitzekessel zugeführt, wodurch zusätzliche 5,93 t/h Dampf von 35 bar und 320°C erzeugt werden.

Das mit 160°C aus dem Gaskühler 8 austretende Gas wird aufgeteilt, 68062 $Nm^3/h$ über Leitung 11 direkt dem Zwischenabsorber 4 zugeführt und 21 938 $Nm^3/h$ über Leitung 12 in einen weiteren als Eco gestalteten Gaskühler 13 geleitet und dort auf 70°C abgekühlt werden.

Die zur Kühlung verwendete Speisewassermenge von 48 t/h tritt mit 35°C über Leitung 14 ein und mit 49°C über Leitung 15 aus. Die dabei ausgetauschte Wärme beträgt 671 300 kcal/h.

Das entspricht einer weiteren zusätzlichen Dampfmenge von 1,08 t/h sowie einer gleichzeitigen Kühlwasserersparnis von 33,6 t/h (bei $\Delta$ t = 20°C). Die bei diesem Wärmetausch auftretende maximale Wandtemperatur beträgt ca. 68°C, das mit dem Gas über Leitung 16 ablaufende Kondensat ist Oleum einer Konzentration von 26,5 % freiem $SO_3$.

Aus den über Leitung 16 dem Oleumturm 17 zugeführten 21 938 $Nm^3$/h Gasen mit 9 % $SO_3$, werden 1570 $Nm^3$/h $SO_3$, das sind 5726 kg/h, in Oleum absorbiert.

Zusammen mit aus dem Zwischenabsorber 4 zugeführten 10 941 kg/h $H_2SO_4$ (98,5 %) entspricht das einer Tagesproduktion von 400 t Oleum mit 30 % freiem $SO_3$.

Die über Leitung 18 dem Zwischenabsorber 4 zugeführten 20 371 $Nm^3$/h enthalten nur noch 2 % $SO_3$. Die Temperatur beträgt 40°C.

Patentansprüche

1. Verfahren zur Nutzbarmachung von Wärme aus einer Heißzwischenabsorption mit vorgeschaltetem Oleumturm, welcher mit nur einem Teil der Gesamtgasmenge beaufschlagt wird, dadurch gekennzeichnet, daß das aus dem Zwischenwärmetauscher austretende gesamte $SO_3$-haltige Gas in einem ersten zusätzlichen Gaskühler mit Luft für einen S-Verbrennungs-, Röst-, oder Spaltofen zunächst auf eine Temperatur oberhalb des Taupunktes von 140-160°C vorgekühlt und anschließend die zum Oleumturm geführte Teilgasmenge in einem zweiten zusätzlichen Gaskühler mit Wasser auf eine Temperatur unterhalb des Taupunktes maximal 90°C, vorzugsweise 70°C und tiefer, abgekühlt wird, wobei die dem Oleumturm zugeführte Teilgasmenge so bemessen wird, daß die zur Erzielung der geforderten Produktion notwendige Gleichgewichtstemperatur maximal 50°C, vorzugsweise 40°C, beträgt.

2. Verfahren gemäß Anspruch 1, dadurch gekennzeichnet, daß zur Kühlung im zweitem zusätzlichen Gaskühler Kesselspeisewasser benutzt wird.

3. Verfahren gemäß Anspruch 1, dadurch gekennzeichnet, daß zur Kühlung eine andere Flüssigkeit wie Dünnsäure oder Wärmeträgeröl eingesetzt wird.

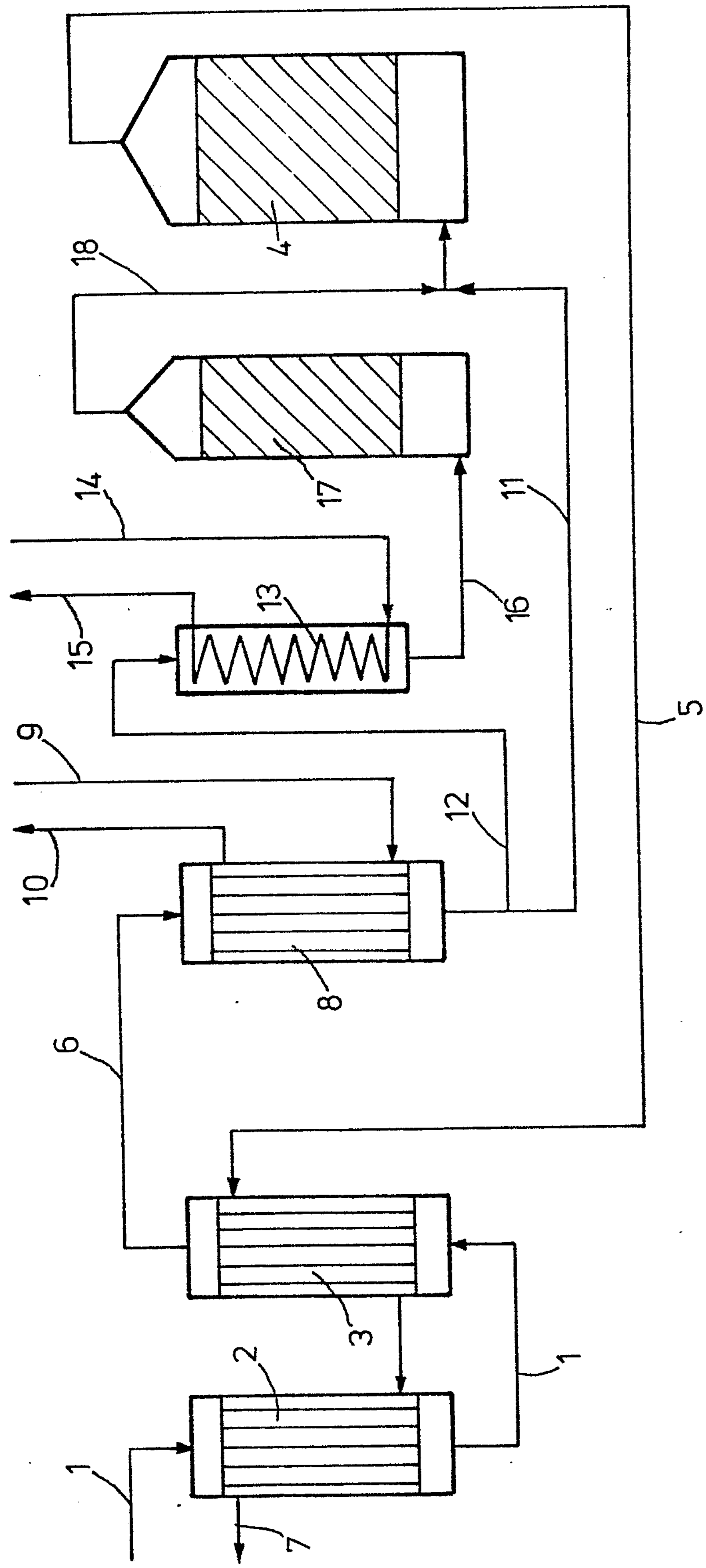
1
2
3
1
4
5
6
7
8
9
10
11
12
13
14
15
16
17
18